# EUROPÄISCHE PATENTSCHRIFT

(11) **EP 2 622 006 B1**
(45) Veröffentlichungstag und Bekanntmachung des Hinweises auf die Patenterteilung: **26.08.2015**
(21) Anmeldenummer: 11761041.0
(22) Anmeldetag: 15.09.2011
(51) Int. Cl.: C08K 3/04, H01B 1/18, H01B 3/18, H01B 3/48, H01B 1/12

(54) **ELEKTRISCH ISOLIERENDER NANOKOMPOSIT MIT HALBLEITENDEN ODER NICHTLEITENDEN NANOPARTIKELN, VERWENDUNG DIESES NANOKOMPOSITS UND VERFAHREN ZU DESSEN HERSTELLUNG**
ELECTRICALLY INSULATING NANOCOMPOSITE HAVING SEMICONDUCTIVE OR NON-CONDUCTIVE NANOPARTICLES, USE OF SAID NANOCOMPOSITE, AND METHOD FOR PRODUCING SAME
NANOCOMPOSITE ÉLECTRO-ISOLANT PRÉSENTANT DES NANOPARTICULES SEMI-CONDUCTRICES OU NON CONDUCTRICES, UTILISATION DE CE NANOCOMPOSITE ET PROCÉDÉ POUR LE PRODUIRE

(30) Priorität: 29.09.2010 DE 102010041630
(43) Veröffentlichungstag der Anmeldung: 07.08.2013
(73) Patentinhaber: Siemens Aktiengesellschaft, 80333 München (DE)
(72) Erfinder: LÜTHEN, Volkmar, 14163 Berlin (DE); WINKLER, Gabriele, 13587 Berlin (DE)
(86) Internationale Anmeldenummer: PCT/EP2011/066013
(87) Internationale Veröffentlichungsnummer: WO 2012/041715

(56) Entgegenhaltungen:
- EP-A1- 0 287 814
- EP-A1- 0 294 231
- EP-A1- 0 783 015
- EP-A2- 2 112 192
- WO-A1-2006/131011
- WO-A1-2008/012196
- WO-A1-2008/123326
- WO-A1-2011/003634
- WO-A1-2011/003635
- WO-A2-2004/106420
- WO-A2-2006/122736
- DE-A1- 3 321 281
- JP-A- 2008 031 206
- US-A1- 2008 142 762
- US-A1- 2010 009 165
- JAMES D. MENDEZ ET AL: "Synthesis, electrical properties, and nanocomposites of poly(3,4-ethylenedioxythiophene) nanorods", POLYMER CHEMISTRY, Bd. 1, Nr. 8, 1. Januar 2010 (2010-01-01), Seite 1237, XP55014654, ISSN: 1759-9954, DOI: 10.1039/c0py00118j

## Beschreibung

Die Erfindung betrifft einen Nanokomposit mit halbleitenden oder nichtleitenden Nanopartikeln, die in einem elektrisch isolierenden Isolierstoff verteilt sind. Außerdem betrifft die Erfindung eine Verwendung dieses Nanokomposits. Zuletzt betrifft die Erfindung auch ein Verfahren zur Herstellung eines einen Nanokomposit bildenden Cellulosematerials, in dem halbleitende oder nichtleitende Nanopartikel vorhanden sind.

Aus der US 4,521,450 ist es bekannt, dass ein imprägnierfähiges Vollmaterial aus Cellulosefasern in ein wässriges Oxidationsmittel, wie z. B. einer schwach säurehaltigen Lösung aus Eisen (III)-chloridlösung, Cer(IV)-sulfat, Kaliumhexacyanoferrat(III) oder Molybdatophosphorsäure getaucht werden kann. Anschließend wird das feuchte Cellulosematerial entweder mit flüssigem oder dampfförmigem Pyrrol-Verbindungen bei Raumtemperatur so lange behandelt, bis das Pyrrol in Abhängigkeit von der Konzentration des Oxidationsmittels polymerisiert wird. Das so imprägnierte Cellulosematerial wird bei Raumtemperatur 24 Stunden getrocknet. Das Oxidationsmittel sorgt einerseits für die Polymerisation der Pyrrol-Verbindungen, außerdem für eine Erhöhung der elektrischen Leitfähigkeit. Der spezifische Widerstand p solcher imprägnierter Cellulosematerialien kann damit über die Konzentration an Pyrrolen und die Art des Oxidationsmittels beeinflusst werden. Bei der Herstellung des imprägnierten Cellulosematerials muss die toxische Wirkung des Pyrrols durch geeignete Arbeitsbedingungen und eine entsprechende Abfallbeseitigung berücksichtigt werden.

Weiterhin ist es bekannt, dass Nanokomposite auch als feldgradierendes Material verwendet werden können, wenn es darum geht, Spitzen bei der Ausbildung von elektrischen Feldern, beispielsweise an der Isolation elektrischer Leiter, zu verringern. Gemäß der WO 2004/038735 A1 kann hierzu beispielsweise ein Material, bestehend aus einem Polymer, verwendet werden. In diesem wird ein Füllstoff verteilt, dessen Partikel Nanopartikel sind, also einen mittleren Durchmesser von höchtens 100 nm aufweisen. Gemäß der US 2007/0199729 A1 sind für derartige Nanopartikel u. a. halbleitende Materialien einsetzbar, deren Bandlücke in einem Bereich von 0 eV und 5 eV liegt. Mittels der eingesetzten Nanopartikel, die beispielsweise aus ZnO bestehen können, lässt sich der elektrische Widerstand des Nanokomposits einstellen. Wird bei der Zumischung der Nanopartikel ein bestimmter Anteil des Volumens überschritten, der je nach Größe der Nanopartikel bei 10 bis 20 Vol-% liegt, so verringert sich der spezifische Widerstand des Nanokomposits spürbar, wobei sich auf diese Weise die elektrische Leitfähigkeit des Nanokomposits einstellen und an die geforderten Bedingungen anpassen lässt. Insbesondere lässt ich ein spezifischer Widerstand in einer Größenordnung von 10¹² Ωm einstellen. Dieser vergleichsweise hohe elektrische Widerstand führt bei einer Beanspruchung eines elektrischen Bauteils, welches mit dem Nanokomposit beschichtet ist, dazu, dass bei Anliegen einer Gleichspannung ein gewisser Verluststrom hingenommen werden muss. Erreicht wird allerdings ein Spannungsabfall über den Nanokomposit, welcher eine gleichmäßigere Verteilung des Potentials zur Folge hat und damit auch das entstehende elektrische Feld in geeigneter Weise gradiert. Hierdurch können die entstehenden Feldspitzen verringert werden, wodurch vorteilhaft die Durchschlagfestigkeit gesteigert wird.

Bei einer Beanspruchung des elektrischen Leiters mit einer Wechselspannung entsteht ebenfalls ein feldgradierender Effekt, der allerdings einem anderen Mechanismus folgt. Die feldschwächende Wirkung des Nanokomposits hängt hierbei von der Permittivität des Nanokomposits ab, wobei die Permittivität ε ein Maß für die Durchlässigkeit eines Materials für elektrische Felder ist. Die Permittivität wird auch als Dielektrizitätskonstante bzeichnet, wobei im Folgenden der Begriff "Permittivität" verwendet werden soll. Als relative Permittivität bezeichnet man das durch die Permittivitätszahl εᵣ = ε/ε₀ bezeichnete Verhältnis der Permittivität eines Stoffes zur elektrischen Feldkonstante ε₀, welche die Permittivität des Vakuums angibt. Je höher die relative Permittivität ist, desto größer ist auch der felschwächende Effekt des eingesetzten Stoffes im Verhältnis zum Vakuum. Im Folgenden werden nur die Permittivitätszahlen der zum Einsatz kommenden Stoffe behandelt.

Allgemein bekannt sind weiterhin als Nanopartikel zu bezeichnende Kohlenstoff-Nanoröhrchen (im Folgenden als CNT bezeichnet) und Bornitrid-Nanoröhrchen (im Folgenden als BNNT bezeichnet). Diese Strukturen können zwar in einer Länge von mehreren Mikrometern vorliegen, weisen jedoch Durchmesser von unter 100 nm auf und sind deswegen als Nanopartikel zu verstehen. Wie z. B. C.W Chang et al., "Isotope Effect on the Thermal Conductivity of Boron Nitride Nanotubes", Physical Review Letters 97, (2006) zu entnehmen ist, sind die Eigenschaften von Nanoröhrchen stark abhängig von deren Durchmesser. Beispielsweise steigt die thermische Leitfähigkeit von CNT und BNNT mit sinkendem Durchmesser derselben. Aus F. Du et al., "Effect of nanotube alignment on percolation conductivity in carbon nanotube/polymer composites", Physical Review B 72, (2005) ist bekannt, dass CNT in Polymerkompositen wesentlich geringere Perkulationsschwellen zur Erzeugung einer elektrischen Leitfähigkeit im Komposit aufweisen, als beispielsweise sphärische Nanopartikel. Die Perkulationsschwelle kann durch Maßnahmen einer Ausrichtung der CNT in der Matrix des Polymers auch noch gesteigert werden und kann bei einem Gehalt an CNT in der Matrix von unter 1 Gew-% liegen. Außerdem ist in C. Tang et al., "Fluorination and Electrical Conductivity of BN Nanotubes", Journal of American Chemical Society 127, (2005), Seiten 6552 bis 6553 (inklusive Supporting Information) bekannt, dass BNNT hinsichtlich ihrer halbleitenden Eigenschaften ähnlich wie massive Halbleiter durch Dotierung mit verschiedenen Dotierstoffen ihrer elektrischen Leitfähigkeit beeinflusst werden können.

Gemäß der DE 10 2007 018 540 A1 ist es auch bekannt, CNT beispielsweise in transparente leitfähige Polymere einzubringen. Damit lassen sich beispielsweise Widerstandsheizungen auf KFZ-Scheiben realisieren, deren Transparenz hierdurch auch gezielt eingestellt werden kann. Es lassen sich also auch getönte Scheiben realisieren. Als elektrisch leitfähige Polymere werden beispielsweise Polypyrrole, Polyanilin, Polythiophene, Polyparaphenylene, Polyparaphenylen-Vinylene und Derivate dieser genannten Polymere genannt. Ein Beispiel für ein Polyanilin wird zusätzlich genannt, nämlich PEDOT, das durch die Bayer AG beispielsweise unter dem Handelnamen Baytron vertrieben wird. PEDOT hat den systematischen Namen Poly-(3,4-ethylen-dioxythiophen).

Gemäß der DE 33 21 281 A1 ist offenbart, dass ein Nanokomposit aus einem Cellulsefasern enthaltenden Isolierstoff und einem Polypyrrol gewonnen werden kann, indem das Cellulosematerial mit der Pyrrolverbindung und einem Ferrichlorid als Oxidationsmittel imprägniert wird. Die Konzentration des sich ausbildenden Polypyrrols in dem Isolierstoff hängt von der zugegebenen Menge des Oxidationsmittels ab. Mit steigender Konzentration an Polypyrrol lässt sich eine Verringerung des spezifischen Widerstands des imprägnierten Cellulosematerials verzeichnen.

Aufgabe der Erfindung ist es, einen Nanokomposit mit halbleitenden oder nichtleitenden Nanopartikeln in einem elektrisch isolierenden Isolierstoff sowie ein Verfahren zur Herstellung eines solchen Nanokomposits anzugeben, mit dem eine vereinfachte Herstellung möglich ist. Außerdem ist es Aufgabe der Erfindung, eine Verwendung für einen solchen Nanokomposit anzugeben.

Die genannte Aufgabe wird erfindungsgemäß durch den eingangs angegebenen Nanokomposit dadurch gelöst, dass der Isolierstoff aus einem Cellulosematerial besteht und zumindest ein Teil der in dem Isolierstoff verteilten Nanopartikel eine Umhüllung aus einem elektrisch leitfähigen Polymer aufweisen. Als Cellulosematerial kann beispielsweise ein Papier, Pappe oder Pressspan verwendet werden. Auch alle anderen Formen von Cellulosematerial sind denkbar. Das Cellulosematerial weist einen Aufbau aus Cellulosefasern auf, die in ihrer Gesamtheit den das Cellulosematerial bildenden Verband ausmachen. Als halbleitende oder nichtleitende Nanopartikel können beispielsweise Si, SiC, ZnO, BN, GaN, AlN oder C verwendet werden. Als elektrisch leitfähige Polymere können die bereits oben und in der DE 10 2007 018 540 A1 erwähnten Polymere Verwendung finden.

Erfindungsgemäß führt eine Umhüllung der verwendeten Nanopartikel mit den elektrisch leitfähigen Polymeren dazu, dass die elektrische Leitfähigkeit der Nanopartikel durch die Umhüllung gesteigert wird. Werden die Nanopartikel in dem Cellulosematerial verteilt, führt dies daher zu einer Erhöhung der elektrischen Leitfähigkeit bzw. zu einer Verminderung des spezifischen Widerstands. Hierdurch kann das Cellulosematerial an unterschiedliche Aufgabenstellungen angepasst werden, wenn diese eine bestimmte elektrische Leitfähigkeit des Cellulosematerials erfordern.

Ein weiterer Vorteil bei dem erfindungsgemäßen Nanokomposit liegt darin, dass die thermische Beständigkeit des Nanokomposits vergleichsweise hoch ist. An sich ist aufgrund der allgemeinen bekannten Temperaturstabilitäten von PEDOT, PSS, dem aus den einzelnen Ionomeren gebildeten Polymer, bei 200° C und PANI bei 300° C eine Temperaturstabilität nicht höher als die der verwendeten Polymere zu erwarten. Nanopartikel wie die BNNT weisen allerdings Temperaturstabilitäten von bis zu 1100° C auf. Es hat sich nun überraschend gezeigt, dass eine Umhüllung der temperaturstabilen Nanopartikel mit Ionomeren wie den oben Angegebenen auch zu einer Erhöhung der Temperaturstabilität der umhüllenden Polymere führt. Durch Verwendung der Nanopartikel kann somit insgesamt vorteilhaft eine verbesserte Temperaturstabilität des erfindungsgemäßen Kompositmaterials erreicht werden.

Erfindungsgemäß wird eine Vernetzung der leitfähigen Polymere erst im Cellulosematerial abgeschlossen, wenn die Umhüllung der Nanopartikel vor dem Einbringen in das Cellulosematerial zunächst mit Vorstufen dieser Polymere oder mit noch nicht vollständig polymerisierten Polymeren umhüllt werden. Eine abschließende Polymerisierung kann dann erfolgen, wenn das Cellulosematerial bereits mit den Nanopartikeln imprägniert wurde, wobei zwischen benachbarten Nanopartikeln auf diese Weise verbindende Polymerfäden ähnlich wie Brücken entstehen, wodurch ein elektrisch leitfähiges Netzwerk in dem Verband des Cellulosematerials entsteht. Hierbei kann vorteilhaft mit einem geringen Materialaufwand für die Imprägnierung eine vergleichsweise hohe Steigerung der elektrischen Leitfähigkeit erreicht werden.

Besonders vorteilhaft ist die Verwendung von leitfähigen Polymeren, die aus einer Mischung von positiv geladenen Ionomeren und negativ geladenen Ionomeren hergestellt werden. Als negativ geladenes Ionomer kann z. B. PSS Verwendung finden. Hierbei handelt es sich um Polystyrensulfonat. Als positiv geladenes Ionomer kann das bereits genannte PEDOT oder PANI (hierbei handelt es sich um Polyanilin) Verwendung finden. Auch Mischungen dieser beiden positiv geladenen Ionomere können Verwendung finden. Die Ionomere polymerisieren dann durch eine geeignete Wärmebehandlung, wobei die oben bereits erwähnten Polymernetzwerke entstehen, die das Cellulosematerial durchziehen und dessen spezifischen Widerstand verringern. Die genannten Ionomere sind insbesondere aufgrund ihrer Wasserlöslichkeit vorteilhaft besonders einfach im Rahmen eines Prozesses zur Herstellung des Cellulosematerials zu verarbeiten. Der Herstellungsprozess des Cellulosematerials (beispielsweise Papierherstellung) ist nämlich ebenfalls ein wasserbasierter Prozess, wobei anders als nach dem Stand der Technik bei der Imprägnierung des Cellulosematerials mit den Ionomeren kein Oxidationsmittel zum Einsatz kommen muss. Außerdem sind die genannten Ionomere auch ungiftig, weswegen eine Entsorgung der Produktionsabfälle unproblematisch erfolgen kann. Hierdurch wird vorteilhaft das Herstellungsverfahren stark vereinfacht.

Gemäß einer vorteilhaften Ausbildung der Erfindung kann vorgesehen werden, dass die Nanopartikel BNNT (Bornitrid-Nanotubes) sind. Hierbei handelt es sich um halbleitende Nanopartikel mit einer Bandlücke von ca. 5,5 eV. Der spezifische Widerstand lässt sich durch die BNNT in ähnlicher Weise beeinflussen wie durch die CNT in der oben beschriebenen Weise. Außerdem lassen sich BNNT vorteilhaft mit Dotierstoffen dotieren, wodurch neben der Beschichtung mit elektrisch leitfähigen Polymeren ein weiterer Parameter zur Einstellung des spezifischen Widerstandes der BNNT und damit auch des Cellulosematerials möglich ist.

Ein Nanokomposit mit halbleitenden oder nichtleitenden Nanopartikeln kannn zur Lösung der oben angegebenen Aufgabe insbesondere als Isolationsmaterial für einen Transformator verwendet werden. Bei diesem Nanokomposit ist erfindungsgemäß zumindest ein Teil der in dem Isolierstoff verteilten Nanopartikel mit einer Umhüllung aus elektrisch leitfähigen Polymeren versehen. Außerdem besteht der Nanokomposit aus einem Cellulosematerial, in dem die Nanopartikel verteilt sind. Für diesen Isolierstoff und die Verwendung elektrisch leitfähiger Polymere und die Nanopartikel gilt das oben Aufgeführte entsprechend.

Die Aufgabe wird erfindungsgemäß durch ein Verfahren zum Herstellen eines einen Nanokomposit bildenden Cellulosematerials gelöst, bei dem folgende Schritte durchlaufen werden. Zunächst wird ein wässriger Elektrolyt aus einem positiv geladenen Ionomer und einem negativ geladenen Ionomer, insbesondere PSS, hergestellt. In diesem Elektrolyt werden außerdem halbleitende oder nichtleitende Nanopartikel, insbesondere BNNT, dispergiert. Hierdurch entsteht eine Pulpe, der Ausgangsstoff für eine Herstellung von Papier, welches aus der Pulpe geschöpft wird. Alternativ können die Cellulosefasern auch mit dem Elektrolyt getränkt werden. Dieses setzt voraus, dass bereits ein Cellulosefasern enthaltendes Rohmaterial vorhanden ist, welches vorzugsweise trocken vorliegt oder in entwässertem Zustand vorliegt, so dass der Elektrolyt diesem Zwischenprodukt zugeführt werden kann. Im nächsten Schritt wird das Wasser des Elektrolyten zumindest so weit entfernt, dass das Cellulosematerial entsteht. Hiermit ist gemeint, dass das Cellulosematerial bereits einen handhabbaren Verband bildet, der einer weiteren Bearbeitung zugrunde gelegt werden kann. Dies erfolgt durch Entwässerung beispielsweise, wie aus der Papierherstellung bekannt, durch Abtropfen der Pulpe auf einem Sieb, sowie mechanisches Pressen und Erwärmung. Zum Schluss werden die Ionomere vernetzt. Hierzu ist vorzugsweise eine Wärmebehandlung oberhalb der Vernetzungstemperatur der betreffenden Ionomere erforderlich. Es bildet sich hierdurch das oben bereits erwähnte Netzwerk von Polymeren, welches elektrisch leitfähig ist, und daher den spezifischen Widerstand des Cellulosematerials herabsetzt.

Für die Herabsetzung des spezifischen Widerstandes ist allerdings nicht allein das Netz aus dem elektrisch leitfähigen Polymer verantwortlich. Weiterhin liegen innerhalb dieses Netzwerks die Nanopartikel, insbesondere die BNNT, vor, welche ebenfalls zu einer Verringerung des spezifischen Widerstandes beitragen. Gleichzeitig wird durch Verwendung der Nanopartikel die Temperaturbeständigkeit des Cellulosematerials in der oben bereits beschriebenen Weise erhöht.

Gemäß einer vorteilhaften Ausgestaltung des Verfahrens ist vorgesehen, dass als positiv geladene Ionomere PEDOT und/oder PANI verwendet werden. Die Vorteile im Zusammenhang mit der Auswahl dieser Ionomere sind vorstehend bereits erläutert worden.

Weiterhin kann vorteilhaft vorgesehen werden, dass das Entfernen des Wassers vor dem Vernetzen der Ionomere durch ein Walzen des Cellulosematerials unterstützt wird. Dies ist besonders vorteilhaft bei einer kontinuierlichen Herstellung des Cellulosematerials, da durch Walzen des Cellulosematerials eine lange Bahn hergestellt werden kann. Weiterhin vorteilhaft ist es, wenn nach dem Vernetzen der Ionomere ein vollständiges Trocknen des Cellulosematerials erfolgt. Durch das vollständige Trocknen lässt sich der geforderte Wert für den spezifischen Widerstand erreichen, wobei vorteilhaft eine vergleichsweise genaue Einstellung des spezifischen Widerstandes über die Konzentration des Imprägnierstoffes möglich ist.

Vorteilhaft ist es auch, wenn das Entfernen des Wassers und/oder das Vernetzen der Ionomere durch ein Andrücken von beheizten Walzen an das Cellulosematerial erfolgt. Durch den Kontakt zu den beheizten Walzen lässt sich die Wärme vorteilhaft besonders effektiv in das Cellulosematerial eintragen. Hierbei kann die notwendige Vernetzungstemperatur eingestellt werden. Durch Erhitzung des Cellulosematerials kommt es gleichzeitig zum Verdampfen des Restwassers und damit zu einem Trocknungsprozess. Dieser kann durch die beheizten Walzen zumindest eingeleitet werden, wobei ein abschließendes Trocknen auch beispielsweise in einer Wärmekammer erfolgen kann.

Um Cellulosematerialien größerer Dicke herstellen zu können, kann vorteilhaft vorgesehen werden, dass das Cellulosematerial durch Schichten mehrerer vorher imprägnierter Lagen hergestellt wird. Hierdurch kann sichergestellt werden, dass die einzelnen Lagen aus Cellulosematerial so dünn sind, dass eine Imprägnierung zumindest weitgehend über die gesamte Dicke.der Lage ermöglicht wird. Dies ist auch dann möglich, wenn die hergestellten Lagen in der oben beschriebenen Weise durch das Elektrolyt getränkt werden und nicht die einzelnen Cellulosefasern imprägniert werden. Um anschließend zu einem Cellulosematerial einer größeren Dicke zu kommen, wird dieses nach der Behandlung mit dem Elektrolyt zu einem mehrlagigen Cellulosematerial geschichtet. Dabei kann eine Vernetzung und/oder Trocknung bereits vor dem Schichten der Lagen begonnen werden. Vorteilhaft ist es aber, einen Abschluss der Vernetzung erst nach dem Schichten der Lagen vorzunehmen, da dann auch eine Vernetzung der Polymere unterschiedlicher Lagen untereinander erfolgen kann, so dass das bereits beschriebene Netz von Polymeren übergreifend über alle Lagen entsteht. Hierdurch lässt sich der spezifische Widerstand auch eines mehrlagigen Cellulosematerials vorteilhaft mit vergleichsweise wenig Polymermaterial in vergleichsweise starkem Maße erhöhen.

Eine besondere Ausgestaltung der Erfindung sieht vor, dass die Nanopartikel mit einem Netzmittel behandelt werden, bevor sie in dem Elektrolyt dispergiert werden. Hierdurch gelingt das Dispergieren in dem Elektrolyt einfacher, so dass vorteilhaft bei Bedarf eine größere Menge an Nanopartikeln in die durch das Cellulosematerial gebildete Matrix eingebaut werden kann. In diesem Zusammenhang ist zu bemerken, dass auch die Ionomere, die an die Nanopartikel angelagert sind, in Wasser gut löslich sind, so dass auch diese die Wirkung eines Netzmittels haben. Diese Ionomere liegen im Elektrolyt bereits vor, wenn die Nanopartikel diesem zugegeben werden. Sollte die Wirkung der Ionomere zur Herstellung der Dispersion von Nanpartikeln im Elektrolyt jedoch nicht ausreichen, so können zusätzlich die Netzmittel verwendet werden, mit denen die Nanopartikel behandelt werden, bevor sie dem Elektrolyt zugesetzt werden. Als Netzmittel, insbesondere für reine oder funktionalisierte BNNT kommen die Gallussäure (3,4,5-Trihydroxybenzoesäure) oder deren Derivate, wie z. B. Ethylgallat, Propylgallat, Octylgallat oder Dodecylgallat sowie Epicatechingallat oder Epigallocatechingallat zum Einsatz. Bei diesen tritt ein in den Molekülen vorhandener Benzolring mit den Seitenwänden der BNNT in eine π-π-Wechselwirkung. Die OH-Gruppen der Gallussäure (oder deren Derivate) können dann mit den Ionomeren wie PANI, PEDOT oder PSS agieren. Allgemein können BNNT aufgrund ihrer Sp2-Hybridisierung gut mit Netzmitteln reagieren, die in ihrer chemischen Struktur Benzolringe aufweisen. Diese Verbindungen, die n-Elektronen in ihrer chemischen Struktur aufweisen, sowie Substanzen mit C-C-Doppelbindungen sowie Substanzen mit funktionellen Gruppen wie der OH-Gruppe, der COOH-Gruppe, der NH₂-Gruppe oder der SO₃H-Grppe, die jeweils an einem Alkenylrest in gerader, verzweigter oder zyklischer Form oder an einem Arylrest hängen, eignen sich ebenfalls grundsätzlich als Netzmittel insbesondere für BNNT. Die funktionellen Gruppen stellen dabei die Löslichkeit in verschiedenen Lösungsmitteln sicher, je nachdem für welche Lösungsmittel sie geeignet sind. Beispielsweise können BNNT mit Ammoniumoleat in Wasser über 60 Tage dispergiert verwahrt werden. Ammoniumoleat ist ein ionisches Tensit, welches ein Salz der Ölsäure mit C-C-Doppelbindungen ist.

Das erfindungsgemäße Cellulosematerial wurde gemäß einem Ausführungsbeispiel unter Laborbedingungen hergestellt, wobei der Verfahrensablauf im Folgenden näher erläutert werden soll. Verwendet wurde ein kommerziell erhältlicher Pressspan (im Folgenden Cellulose Lieferzustand genannt). Dieser wurde zunächst in 90x50 mm große Stücke mit einer Dicke von 3,1 mm zerschnitten. Diese wurden in destilliertem Wasser bei Temperaturen zwischen 95 und 99° C unter Rühren mittels einem Magnetrührer erhitzt, bis sich einzelne Lagen im Randbereich des Pressspans zu lösen begannen. In diesem Stadium war der Pressspan vollständig mit Wasser vollgesaugt. Der nasse Pressspan wurde aus dem Wasser genommen und in seine einzelnen Lagen getrennt. Die separierten Lagen wurden erneut in destilliertem Wasser bei 95 - 99° C unter Rühren erhitzt, bis sich weitere einzelne Blätter lösten. Die einzelnen Lagen und Blätter wurden dem Wasser erneut entnommen und bis zur dünnsten trennbaren Schicht vereinzelt. Die sehr dünnen, mechanisch nicht mehr trennbaren Schichten wurden unter Rühren in destilliertem Wasser (Temperatur s. o.) so lange erhitzt, bis einzelne Cellulosefaser vorlagen.

In einem nächsten Schritt erfolgte die Filtration der so erhaltenen Pulpe zu dünnen Gewebelagen. Die einzelnen Cellulosefäden wurden abfiltriert, und zwar mit Hilfe eines Büchnertrichters unter Anlegen eines Unterdrucks. Als Filterpapier wurde ein Schwarzbandfilter der Fa. Schleicher & Schöll Nr. 589 oder 595 verwendet. Die so erhaltenen Gewebelagen enthielten noch 270 bis 300 % Wasser bezogen auf das ursprüngliche Gewicht des eingesetzten Pressspans. Die Gewebelagen ließen sich leicht vom Schwarzbandfilter trennen.

In einem nächsten Schritt wurden die einzelnen Gewebelagen in einer wässrigen Dispersion von mit PEDOT:PSS umhüllten BNNT unter Rühren mit einem Magnetrührer bei Raumtemperatur zu einzelnen Cellulosefäden vereinzelt. Eine Imprägnierung der Cellulosefäden mit umhüllten BNNT erfolgte während dieses Rührvorgangs. Nach einer Stunde Rühren wurden die imprägnierten Cellulosefäden nach dem oben bereits beschriebenen Prinzip unter Unterdruck auf einem Schwarzbandfilter abfiltriert. Die entstandene Gewebelage ließ sich wieder leicht vom Schwarzbandfilter ablösen. Die abfiltrierte Dispersion mit durch PEDOT:PSS umhüllten BNNT wurde in einer Saugflasche aufgefangen und konnte nach Wiederherstellung der ursprünglichen Konzentration an umhüllten BNNT einer Wiederverwertung zugeführt werden.

In einem nächsten Schritt sollten die imprägnierten Gewebelagen durch Walzen geglättet werden. Hierzu wurden die einzelnen Gewebslagen übereinandergelegt und mit einem flachen Gegenstand leicht aneinandergedrückt. Anschließend wurde der Stapel aus imprägnierten Gewebelagen mehrmals mit steigendem Druck durch eine Walze komprimiert. Dabei wurden die einzelnen Gewebelagen zu einem imprägnierten Faserfilz verdichtet, wobei überschüssige Flüssigkeit herausgedrückt wurde. Der Gewebestapel wurde so lange verdichtet, bis die Dicke des erhaltenen Faserfilzes ca. 4 - 4,5 mm betrug.

In einem nächsten Schritt sollten die Polymere vernetzt werden und eine Trocknung des Cellulosematerials erfolgen. Hierzu wurde das verbliebene Wasser durch Verdampfen in einem Trockenschrank zwischen Stahlplatten unter Druck entfernt. Die Temperatur zum Trocknen wurde so gewählt, dass zunächst eine Vernetzung des Polymers auf den BNNT und untereinander stattfand. Dazu wurde der imprägnierte Faserfilz zwischen Stahlplatten gelegt. Die Stahlplatten wurden mit einem Druck von 2,4 KPa zusammengedrückt. Die Auflageflächen, mit denen der imprägnierte Faserfilz in Berührung kam, waren mit Teflon beschichtet, um ein Anbacken der noch nicht polymerisierten Ausgangsstoffe an die Metallplatten zu verhindern. Die Vernetzung des Polymers wurde bei 82° C durchgeführt und dauerte zwischen 30 und 90 Minuten. Sobald die Vernetzung abgeschlossen war, wurden zum Endtrocknen Auflageflächen aus Metall verwendet. Die Endtrocknung erfolgt bei 104° C und einem Druck von 4,22 KPa und wurde so lange ausgeführt, bis sich das Gewicht und die Dicke des Cellulosematerials nicht mehr veränderte.

Durch die unter Laborbedingungen hergestellten Cellulosematerialien ließen sich folgende Vorteile erzielen: Durch Imprägnierung des Cellulosematerials mit PEDOT:PSS oder mit PANI:PSS und den durch diese Polymere umhüllten BNNT konnten die elektrischen Eigenschaften kontrolliert eingestellt werden, so dass der spezifische Widerstand des Cellulosematerials verändert werden konnte. Durch die Zugabe der BNNT stieg außerdem die thermische Stabilität der verwendeten Polymere. Die Konzentration an BNNT im Vergleich zu Cellulosematerialien ohne eine Ummantelung aus Polymeren konnte gesenkt werden, so dass dieser vergleichsweise kostspielige Werkstoff nur in geringeren Konzentrationen verarbeitet werden musste. Der apparative Aufbau konnte wegen der toxischen Unbedenklichkeit der verwendeten Polymere im Vergleich zur Verwendung von Pyrrolverbindungen verhältnismäßig gering gehalten werden.

Durch die gute Dispergierbarkeit der mit den Polymeren gemantelten BNNT konnte der Herstellungsprozess für das Cellulosematerial weitgehend ungehindert durchlaufen werden.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschieden zwischen den einzelnen Figuren ergeben. Es zeigen:
Figur 1 und 2 Ausführungsbeispiele von erfindungsgemäßen Nanokompositen in dreidimensionaler Ansicht unter Verwendung unterschiedlicher Nanopartikel,
Figur 3 ein Ausführungsbeispiel des erfindungsgemäßen Nanokommposits im Schnitt, wie dieses als Isolation bei einem Transformator zum Einsatz kommt, wobei die anliegenden Spannungen am Isolationsmaterial schematisch dargestellt sind,
Figur 4 ein Ausführungsbeispiel des erfindungsgemäßen Verfahrens, dargestellt schematisch durch eine Fertigungsanlage als Seitenansicht und
Figur 5 schematisch die Veränderung des spezifischen Widerstandes des erfindungsgemäßen Nanokomposits im Vergleich zu Nanokompositen gemäß dem Stand der Technik in Abhängigkeit vom Füllgrad der Nanopartikel.

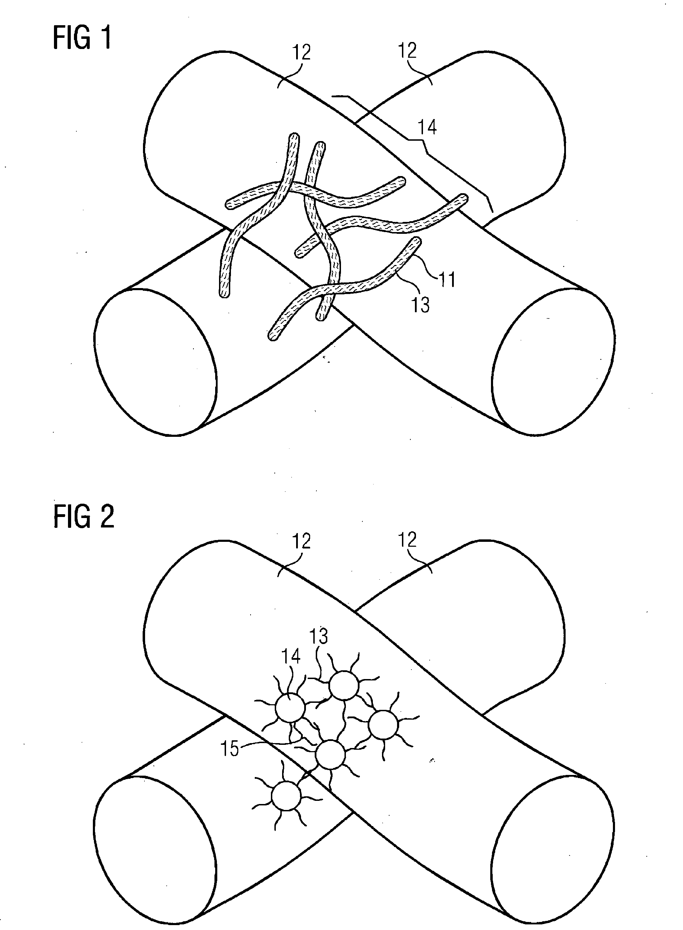

Ein Nankomposit gemäß Figur 1 ist nur als kleiner Ausschnitt dargestellt. Dieser ist mit BNNT 11 versehen, die auf zwei sich kreuzenden exemplarisch das Cellulosematerial repräsentierenden Cellulosefasern 12 aufgebracht sind. Die BNNT 11 sind außerdem durch ein Polymer 13 umhüllt, wobei sich ein Komposit folgenden Aufbaus durch diese Bestandteile ergibt. Das Polymer 13 ist auspolymerisiert und bildet daher ein Netzwerk, welches in Form von dünnen Fäden in Figur 1 angedeutet ist. Dieses Netzwerk umhüllt den Verband der BNNT 11, wobei die BNNT wiederum ein Netzwerk 14 bilden. Dieses liegt innerhalb der Umhüllung durch das Polymer 13, da dieses erst polymerisiert wird, wenn die BNNT in der Matrix der Cellulosefasern 12 bereits das Netzwerk 14 ausgebildet haben. Das Netzwerk 14 der BNNT 11 durchwirkt den ganzen Faserverband, so dass hierdurch eine elektrisch leitende, zusammenhängende Einheit in dem Cellulosematerial vorhanden ist. Dies erklärt die Verringerung des spezifischen Widerstandes des Cellulosematerials gemäß Figur 1 im Vergleich zu nicht imprägnierten Cellulosematerialien.

Auch in Figur 2 sind zwei Cellulosefasern 12 dargestellt. Hier werden allerdings kugelförmige Nanopartikel 14 verwendet, auf denen in der in Figur 2 angedeuteten Weise eine Funktionalisierung durch das Polymer 13 vorliegt. Auch hier führt die Polymerisierung des Polymers 13 dazu, dass zwischen den Nanopartikeln 14 Brücken 15 entstehen, welche zu einer Verbesserung der elektrischen Leitfähigkeit und somit Verringerung des spezifischen Widerstandes des Cellulosematerials führen.

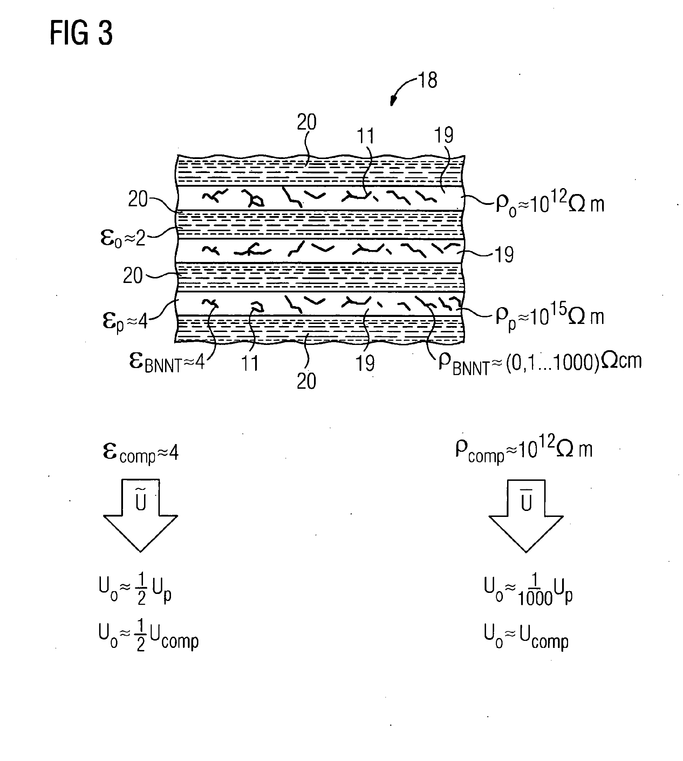

Ein elektrisches Isolationsmaterial 18 gemäß Figur 3 besteht aus mehreren Lagen aus Papier 19 als Cellulosematerial, zwischen denen Ölschichten 20 liegen. Auch die Papiere 19 sind mit Öl getränkt, was in Figur 3 nicht näher dargestellt ist. Dafür ist in Figur 3 innerhalb der Papiere die Imprägnierung mit BNNT 11 zu erkennen. Die gemäß Figur 3 dargestellte Isolierung umgibt beispielsweise in einem Transformator die dort zum Einsatz kommenden Wicklungen, die nach außen und zueinander elektrisch isoliert werden müssen.

Die elektrische Isolation eines Transformators muss im Betriebsfall bei Anliegen einer Wechselspannung elektrische Durchbrüche verhindern. In diesem Fall ist das Isolationsverhalten der Isolierung von der Permittivität der Komponenten der Isolierung abhängig. Für Öl liegt die Permittivitätszahl εₒ ungefähr bei 2, für das Papier εₚ bei 4. Bei einer Beanspruchung der Isolation mit einer Wechselspannung ergibt sich daher für die Belastung der einzelnen Isolationskomponenten, dass die am Öl anliegende Spannung Uₒ ungefähr doppelt so hoch ist, wie die am Papier anliegende Spannung Uₚ. Wird der erfindungsgemäße Nanokomposit verwendet, bei dem das Papier 19 in der in Figur 3 dargestellten Weise mit BNNT imprägniert ist, so beeinflussen die BNNT die Spannungsverteilung in der erfindungsgemäßen Isolation nicht, da die Permittivitätszahl ε_{BNNT} ebenfalls ungefähr bei 4 liegt und daher die Permittivität ε_{comp} des imprägnierten Papiers auch bei ungefähr 4 liegt. Damit ist auch bei der erfindungsgemäßen Isolation die am Öl angreifende Spannung Uₒ ungefähr doppelt so groß wie die am Nanokomposit (Papier) anliegende Spannung U_{comp}.

Treten Störfälle am Transformator auf, so kann auch die Durchschlagfestigkeit der Isolation bei Anliegen von Gleichspannungen von Bedeutung sein. Die Verteilung der anliegenden Spannung auf die einzelnen Isolationsbestandteile ist dann allerdings nicht mehr von der Permittivität abhängig, sondern vom spezifischen Widerstand der einzelnen Komponenten. Der spezifische Widerstand ρₒ von Öl liegt bei 10¹² Ωm. Demgegenüber ist ρₚ von Papier um drei Größenordnungen höher und liegt bei 10¹⁵ Ωm. Dies bewirkt, dass bei Anliegen einer Gleichspannung die Spannung am Öl Uₒ das Tausendfache der Spannung am Papier Uₚ beträgt. Dieses Ungleichgewicht birgt die Gefahr, dass es bei einer Beaufschlagung der Isolation mit einer Gleichspannung zu Durchschlägen im Öl kommt und die elektrische Isolation versagt.

Die erfindungsgemäß in das Papier 19 eingebrachten BNNT 11 werden z. B. durch eine geeignete Beschichtung aus PEDOT:PSS und evtl. durch eine zusätzliche Dotierung mit Dotierstoffen mit ihrem spezifischen Widerstand (zwischen 0,1 und 1000 Ωcm) so eingestellt, dass der spezifische Widerstand des Papiers ρₚ herabgesetzt wird. Hierdurch lässt sich für den erfindungsgemäßen Komposit eine spezifische Leitfähigkeit ρ_{comp} einstellen, der an den spezifischen Widerstand ρₒ angenähert ist und im Idealfall diesem ungefähr entspricht. Bei einem spezifischen Widerstand ρ_{comp} von ungefähr 10¹² Ωm liegt die am Öl anliegende Spannung Uₒ im Bereich der am Komposit anliegenden Spannung U_{comp}, so dass sich ein ausgeglichenes Spannungsprofil in der Isolation einstellt. Hierdurch wird vorteilhaft die Durchschlagfestigkeit der Isolation verbessert, da sich die Belastung des Öls spürbar verringert.

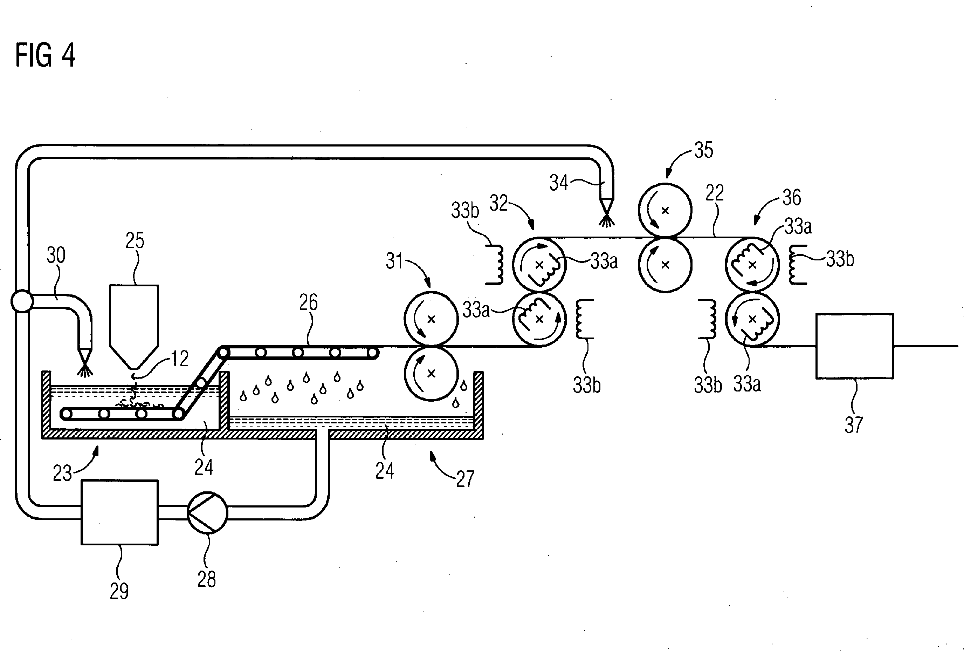

In Figur 4 ist eine Fertigungsanlage für ein Cellulosematerial in Form einer Papierbahn 22 gezeigt, welche sich zur Durchführung eines Ausführungsbeispiels des erfindungsgemäßen Verfahrens eignet. Diese Anlage weist einen ersten Behälter 23 für einen Elektrolyt 24 auf, wobei in dem Elektrolyt Ionomere von PEDOT und PSS sowie Nanopatikel in Form von BNNT enthalten sind. Außerdem werden aus einem Vorratsbehälter 25 Cellulosefasern 12 in den Elektrolyten 24 eingerieselt. Auf diese Weise wird in an sich bekannter Art und daher nicht näher dargestellt eine Pulpe in dem Elektrolyt 24 hergestellt, welche auf einem siebförmigen Laufband 26 abgeschieden wird. Dieses Laufband führt in einen zweiten Behälter 27, wo der Elektrolyt 24 abtropfen kann, wodurch aus den Cellulosefasern eine bereits teilweise entwässerte Matte entsteht. Der Elektrolyt wird über eine Pumpe 28 einer Wiederaufbereitungsanlage 29 zugeführt, wo die erforderliche Konzentration an PEDOT und PSS sowie an BNNT wieder eingestellt wird. Der aufbereitete Elektrolyt kann über einen Zufluss 30 dem ersten Behälter 23 zugeführt werden.

Der Elektrolyt enthält BNNT als Nanopartikel, wobei diese mit den genannten Ionomeren PEDOT und PSS umhüllt sind. Diese Umhüllung erfolgt im Elektrolyt, wobei die Nanopartikel zusätzlich mit einem Netzmittel versehen sein können, damit diese vor der Umhüllung mit den Ionomeren nicht agglomerieren. Alternativ kann in nicht dargestellter Weise auch eine Umhüllung der Nanopartikel vor dem Einbringen in das Elektrolyt erfolgen. Diese können beispielsweise mit den Ionomeren in einer Kugelmühle gemahlen werden oder es wird ein ALD-Verfahren (ALD steht für Atomic Layer Deposition) angewandt.

Eine wässrige BNNT-Dispersion mit 0,01 Gew.-% BNNT in einem wässrigen Elektrolyt mit PEDOT und PSS kann folgendermaßen hergestellt werden. Für einen Ansatz von 250 g Elektrolyt benötigt man 247, 475 g demineralisiertes Wasser, 2,5 g einer Stammlösung, enthaltend PEDOT und PSS in einer Konzentration von 1 vol-% und 0,025 g BNNT. Zur Herstellung der Dispersion wird eine Sonotrode (Typ VS 70T) mit einem Durchmesser von 12,7 mm verwendet. Die Ultraschalleinwirkung bei einer Amplitudenleistung von 30 % wird in Pulsen von jeweils 300 s mit jeweils 300 s Pause eingetragen. Hierdurch wird verhindert, dass sich die Dispersion auf über 40 °C erhitzt. Die Behandlung wird 35 Minuten fortgeführt, der gemessene Energieeintrag liegt dann bei 60 KJ.

Aus dem gewonnenen Cellulosematerial wird im weiteren Verlauf des Verfahrens die Papierbahn 22 hergestellt. Zunächst erfolgt eine weitere Entwässerung über ein Walzenpaar 31, wobei auch der bei diesem Entwässerungsschritt frei werdende Elektrolyt in dem Behälter 27 aufgefangen wird. Anschließend passiert die Papierbahn 22 ein nächstes Walzenpaar 32, wobei durch die S-förmige Führung der Papierbahn um das Walzenpaar ein vergleichsweise großer Umschlingungswinkel erreicht wird. Das Walzenpaar wird nämlich über die angedeuteten Heizeinrichtungen 33a beheizt, so dass ein Wärmeübergang auf die Papierbahn möglich ist. Hierzu können auch zusätzliche Heizeinrichtungen 33b unterstützend zum Einsatz kommen. Über die Heizeinrichtungen 33a, 33b wird die Papierbahn auf Polymerisationstemperatur gebracht, so dass die Ionomere zu PEDOT:PSS polymerisieren und sich das bereits vorstehend beschriebene Netzwerk von mit PEDOT:PSS ummantelten Nanopartikeln bildet. Bei dieser Behandlung erfolgt auch eine weitere Entwässerung.

Nach einem Polymerisieren der Ionomere kann über eine weitere Zuführvorrichtung 34 nochmals Elektrolyt auf die Papierbahn aufgebracht werden, wobei die inzwischen weitgehend entwässerte Papierbahn saugfähig genug ist, damit die Cellulosefasern mit dem Elektrolyt getränkt werden können. Anschließend durchläuft die Papierbahn 22 ein weiteres Walzenpaar 35 und wird hierdurch wieder entwässert. Eine weitere Entwässerung sowie Polymerisierung der zusätzlich eingebrachten Ionomere wird über ein Walzenpaar 36 erreicht, wobei dieses in der zum Walzenpaar 32 beschriebenen Weise über Heizeinrichtungen 33a, 33b beheizbar ist.

Sobald die Papierbahn 22 das Walzenpaar 36 verlässt, ist die Papierbahn weitgehend entwässert. Allerdings enthält diese noch einen Restgehalt an Wasser und wird deswegen einer Trocknungseinrichtung 37 zugeführt und kann in dieser Trocknungseinrichtung nach Bedarf getrocknet werden.

Hierzu ist zu bemerken, dass der spezifische Widerstand p der hergestellten Papierbahn 22 nicht nur vom Gehalt an PEDOT:PSS und an Nanopartikeln wie BNNT, sondern auch vom Restwassergehalt abhängig ist. Soll die Papierbahn beispielsweise als elektrische Isolation in einem Transformator verwendet werden, muss diese mit Öl getränkt werden und darf deswegen möglichst kein Wasser mehr enthalten. Dies ist durch die anschließende Trocknung in der Trockeneinrichtung 37 sicherzustellen. Die Trocknungseinrichtung 37 kann beispielsweise als Ofen ausgeführt sein.

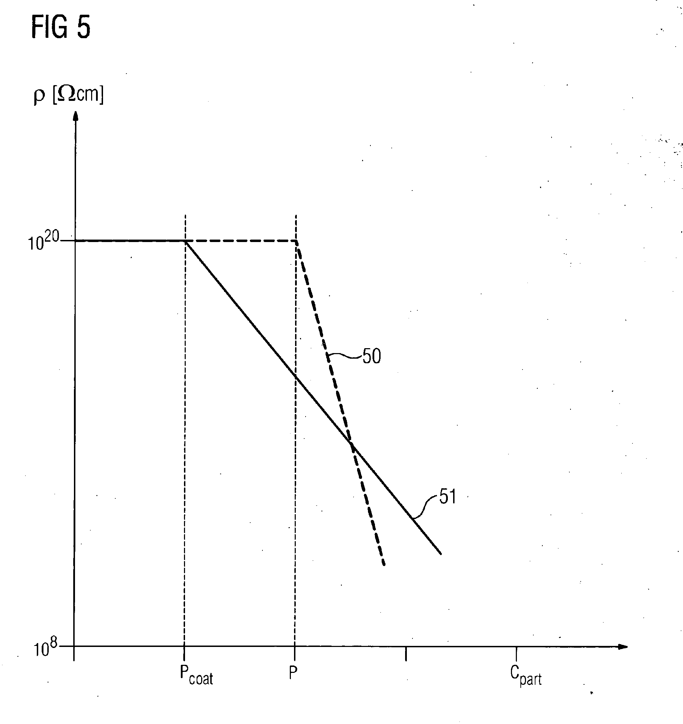

Der Figur 5 lässt sich entnehmen, wie sich durch die Verwendung der erfindungsgemäß vorgesehenen, mit PEDOT:PSS gemantelten Nanopartikel die Veränderung des spezifischen Widerstandes p (in Ω·cm) in Abhängigkeit vom Füllgrad des Cellulosematerials qualitativ verändert. Ein Verlauf 50 wird erhalten, wenn Nanopartikel gemäß dem Stand der Technik (beispielsweise gemäß US 2007/0199729 A1) verwendet werden. Hier ist zu erkennen, dass der Widerstand bei ca. 10²⁰ Ωcm liegt und bei steigenden Füllgraden ab einer bestimmten Perkolationsschwelle P fällt. Dieser Abfall ist verhältnismäßig steil, so dass in diesem Bereich der Füllgrade (Konzentration Cₚₐᵣₜ) der spezifische Widerstand verhältnismäßig empfindlich auf Konzentrationsschwankungen reagiert.

Werden dagegen gemantelte Nanopartikel verwendet, deren Oberfläche durch das elektrisch leitfähige Polymer PEDOT:PSS gebildet wird, so wird durch die Ausbildung eines leitfähigen Netzwerkes in der Matrix des Cellulosematerials der durch die Partikel entstehende Effekt einer Verringerung des spezifischen Widerstands abgeschwächt. Dies bedeutet, dass die Perkolationsschwelle P_{coat} bei geringeren Werten liegt und anschließend, wie der Verlauf 51 zeigt, ein Abfall des spezifischen Widerstandes p in Abhängigkeit von der Konzentration an Partikeln Cₚₐᵣₜ weniger steil ausfällt. Dies bedeutet auch, dass man erstens zur Absenkung des spezifischen Widerstandes weniger Nanopartikel braucht, so dass zumindest bei Verwendung von kostspieligen Nanopartikeln wie BNNT eine erhöhte Wirtschaftlichkeit die Folge ist. Außerdem lässt sich über die Konzentration wegen des weniger steilen Abfalls des spezifischen Widerstandes derselbe genauer einstellen.

## Patentansprüche

1. Nanokomposit mit halbleitenden oder nichtleitenden Nanopartikeln (11, 14), die in einem elektrisch isolierenden Isolierstoff verteilt sind,
**dadurch gekennzeichnet,**
**dass** der Isolierstoff aus einem Material aus Cellulosefasern (19, 22) besteht und zumindest ein Teil der in dem Isolierstoff verteilten Nanopartikel (11, 14) eine Umhüllung aus einem elektrisch leitfähigen Polymer (13) aufweisen, wobei zwischen benachbarten Nanopartikeln ein elektrisch leitfähiges Netzwerk aus elektrisch leitfähigen Polymerfäden des Polymers in dem Verband aus Cellulosefasern ausgebildet ist.

2. Nanokomosit nach Anspruch 1,
**dadurch gekennzeichnet,**
**dass** die Nanopartikel Bornitrid-Nanoröhrchen (11) sind.

3. Nanokomposit nach einem der vorangehenden Ansprüche,
**dadurch gekennzeichnet,**
**dass** das elektrisch leitfähige Polymer (13) eine Mischung aus einem positiv geladenen Ionomer und einem negativ geladenem Ionomer, insbesondere Polystyrensulfonat, ist.

4. Nanokomposit nach Anspruch 3,
**dadurch gekennzeichnet,**
**dass** das positiv geladene Ionomer Poly-(3,4-ethylendioxythiophen) oder Polyanilin ist.

5. Verwendung eines Nanokomposits mit halbleitenden oder nichtleitenden Nanopartikeln (11, 14), wobei
• zumindest ein Teil der in dem Isolierstoff verteilten Nanopartikel (11, 14) eine Umhüllung aus einem elektrisch leitfähigen Polymer (13) aufweisen und
• die Nanopartikel in einem elektrisch isolierenden Isolierstoff aus einem Material aus Cellulosefasern (19, 22) verteilt sind,
• zwischen benachbarten Nanopartikeln ein elektrisch leitfähiges Netzwerk aus elektrisch leitfähigen Polymerfäden des Polymers in dem Verband aus Cellulosefasern ausgebildet ist
als Isolationsmaterial (18) für einen Transformator, wobei der spezifische Widerstand ρ_{comp} des Nanokomposits im Vergleich zum spezifischen Widerstand von Papier ρₚ herabgesetzt ist und an den spezifischen Widerstand von Öl ρₒ angenähert ist oder diesem entspricht.

6. Verfahren zum Herstellen eines einen Nanokomposit bildenden Cellulosematerials,
**dadurch gekennzeichnet,**
**dass**
• ein wässriger Elektrolyt (24) aus einem positiv geladenen Ionomer und einem negativ geladenen Ionomer, insbesondere Polystyren Sulfonat, hergestellt wird und in diesen halbleitende oder nichtleitende Nanopartikel (11, 14), insbesondere Bornitrid-Nanoröhrchen, dispergiert werden,
• Cellulosefasern (12) dem Elektrolyt (24) beigemischt werden oder mit dem Elektrolyt (24) getränkt werden,
• das Wasser des Elektrolyten (24) zumindest so weit entfernt wird, dass das Cellulosematerial (19, 22) entsteht und
• die Ionomere vernetzt werden, wobei sich zwischen benachbarten Nanopartikeln ein elektrisch leitfähiges Netzwerk aus elektrisch leitfähigen Polymerfäden des Polymers in dem Verband aus Cellulosefasern ausbildet.

7. Verfahren nach Anspruch 6,
**dadurch gekennzeichnet,**
**dass** als positiv geladenes Ionomer Poly-(3,4-ethylen-dioxythiophen) oder Polyanilin verwendet wird..

8. Verfahren nach einem der Ansprüche 6 oder 7,
**dadurch gekennzeichnet,**
**dass** das Entfernen des Wassers vor dem Vernetzen der Ionomere durch ein Walzen des Cellulosematerials (19, 22) unterstützt wird.

9. Verfahren nach einem der Ansprüche 6 bis 8,
**dadurch gekennzeichnet,**
**dass** nach dem Vernetzen der Ionomere ein vollständiges Trocknen des Cellulosematerials (19, 22) erfolgt.

10. Verfahren nach einem der Ansprüche 6 bis 9,
**dadurch gekennzeichnet,**
**dass** das Entfernen des Wassers und/oder das Vernetzen der Ionomere durch ein Andrücken von beheizten Walzen (29, 31, 32, 36) unterstützt wird.

11. Verfahren nach einem der Ansprüche 6 bis 10,
**dadurch gekennzeichnet,**
**dass** die Nanopartikel (11, 14) mit einem Netzmittel behandelt werden, bevor sie in dem Elektrolyt (24) dispergiert werden.

12. Verfahren nach einem der Ansprüche 6 bis 11,
**dadurch gekennzeichnet,**
**dass** das Cellulosematerial durch Schichten mehrerer vorher imprägnierten Lagen hergestellt wird.

## Claims

1. Nanocomposite having semiconducting or nonconductive nanoparticles (11, 14) which are dispersed in an electrically insulating material, **characterized in that** the insulating material comprises a material composed of cellulose fibers (19, 22) and at least part of the nanoparticles (11, 14) dispersed in the insulating material have a shell composed of an electrically conductive polymer (13) wherein an electrically conductive network of electrically conductive polymer threads of the polymer is formed between adjacent nanoparticles in the agglomerate of cellulose fibers.

2. Nanocomposite according to Claim 1, **characterized in that** the nanoparticles are boron nitride nanotubes (11).

3. Nanocomposite according to either of the preceding claims, **characterized in that** the electrically conductive polymer (13) is a mixture of a positively charged ionomer and a negatively charged ionomer, in particular polystyrene sulphonate.

4. Nanocomposite according to Claim 3, **characterized in that** the positively charged ionomer is poly-(3,4-ethylene-dioxythiophene) or polyaniline.

5. Use of a nanocomposite having semiconducting or nonconductive nanoparticles (11, 14), wherein
• at least part of the nanoparticles (11, 14) dispersed in the insulating material have a shell composed of an electrically conductive polymer (13) and
• the nanoparticles are dispersed in an electrically insulating material comprising a material composed of cellulose fibers (19, 22),
• an electrically conductive network of electrically conductive polymer threads of the polymer is formed between adjacent nanoparticles in the agglomerate of cellulose fibers
as insulating material (18) for a transformer, wherein the specific resistance ρ_{comp} of the nanocomposite is reduced in comparison to the specific resistance of paper ρₚ and approaches or corresponds to the specific resistance of oil ρₒ.

6. Process for producing a cellulose material forming a nanocomposite, **characterized in that**
• an aqueous electrolyte (24) is produced from a positively charged ionomer and a negatively charged ionomer, in particular polystyrene sulphonate, and semiconducting or nonconductive nanoparticles (11, 14), in particular boron nitride nanotubes, are dispersed in this,
• cellulose fibers (12) are mixed into the electrolyte (24) or impregnated with the electrolyte (24),
• the water of the electrolyte (24) is removed at least to such an extent that the cellulose material (19, 22) is formed and
• the ionomers are crosslinked wherein an electrically conductive network of electrically conductive polymer threads of the polymer is formed between adjacent nanoparticles in the agglomerate of cellulose fibers.

7. Process according to Claim 6, **characterized in that** poly-(3,4-ethylene-dioxythiophene) or polyaniline is used as positively charged ionomer.

8. Process according to either Claim 6 or 7, **characterized in that** the removal of the water is supported by rolling of the cellulose material (19, 22) before crosslinking of the ionomers.

9. Process according to any of Claims 6 to 8, **characterized in that** complete drying of the cellulose material (19, 22) is carried out after crosslinking of the ionomers.

10. Process according to any of Claims 6 to 9, **characterized in that** the removal of the water and/or the crosslinking of the ionomers is supported by pressing-on of heated rollers (29, 31, 32, 36).

11. Process according to any of Claims 6 to 10, **characterized in that** the nanoparticles (11, 14) are treated with a wetting agent before they are dispersed in the electrolyte (24).

12. Process according to any of Claims 6 to 11, **characterized in that** the cellulose material is produced by laminating a plurality of previously impregnated layers.

## Revendications

1. Nanocomposite ayant des nanoparticules (11, 14) semiconductrices ou non conductrices, qui sont réparties dans une substance isolante du point de vue électrique,
**caractérisé**
**en ce que** la substance isolante est en une matière de fibres (19, 22) de cellulose et au moins une partie des nanoparticules (11, 14) réparties dans la substance isolante ont un enrobage en un polymère (13) conducteur de l'électricité, un réseau conducteur de l'électricité composé de fils conducteurs de l'électricité du polymère étant constitué dans le bandage en fibres de cellulose entre des nanoparticules voisines.

2. Nanocomposite suivant la revendication 1,
**caractérisé**
**en ce que** les nanoparticules sont de petits nanotubes (11) en nitrure de bore.

3. Nanocomposite suivant l'une des revendications précédentes,
**caractérisé**
**en ce que** le polymère (13) conducteur de l'électricité est un mélange d'un ionomère chargé positivement et d'un ionomère chargé négativement, notamment de poly(sulfonate de styrène).

4. Nanocomposite suivant la revendication 3,
**caractérisé**
**en ce que** l'ionomère chargé positivement est du poly-(3,4-éthylène-dioxythiophène) ou de la polyaniline.

5. Utilisation d'un nanocomposite ayant des nanoparticules (11, 14) semiconductrices ou non conductrices, dans laquelle
• au moins une partie des nanoparticules (11, 14) réparties dans la substance isolante ont un enrobage en un polymère (13) conducteur de l'électricité et
• les nanoparticules sont réparties dans une substance isolante du point de vue électrique en une matière de fibres (19, 22) de cellulose,
• un réseau conducteur de l'électricité en fils conducteurs de l'électricité du polymère est constitué dans le bandage de fibres de cellulose entre des nanoparticules voisines,
comme matériau (18) isolant pour un transformateur, la résistance ρ_{com} spécifique du nanocomposite étant abaissée par rapport à la résistance spécifique du papier ρₚ et étant voisine de la résistance spécifique de l'huile ρₒ et lui correspondant.

6. Procédé de production d'une matière de cellulose formant un nanocomposite,
**caractérisé**
**en ce que**
• on prépare un électrolyte (24) aqueux composé d'un ionomère chargé positivement et d'un ionomère chargé négativement, notamment de poly(sulfonate de styrène) et on y disperse des nanoparticules (11, 14) semiconductrices ou non conductrices, notamment de petits nanotubes de nitrure de bore,
• on ajoute des fibres (12) de cellulose à l'électrolyte (24) ou les imprègne de l'électrolyte (24),
• on élimine l'eau de l'électrolyte (24), au moins jusqu'à ce que la matière (19, 22) de cellulose se forme et
• on réticule les ionomères en formant, entre des nanoparticules voisines, un réseau conducteur de l'électricité en fils conducteurs de l'électricité du polymère dans le bandage de fibres de cellulose.

7. Procédé suivant la revendication 6,
**caractérisé**
**en ce qu'**on utilise comme ionomère chargé positivement du poly-(3,4-éthylène-dioxythiophène) ou de la polyaniline.

8. Procédé suivant l'une des revendications 6 ou 7,
**caractérisé**
**en ce qu'**on facilite l'élimination de l'eau avant la réticulation des ionomères par un laminage de la matière (19, 22) de cellulose.

9. Procédé suivant l'une des revendications 6 à 8,
**caractérisé**
**en ce que**, après la réticulation des ionomères, on effectue un séchage complet de la matière (19, 22) de cellulose.

10. Procédé suivant l'une des revendications 6 à 9,
**caractérisé**
**en ce qu'**on facilite l'élimination de l'eau et/ou la réticulation des ionomères par une application de cylindres (29, 31, 32, 36) chauffés.

11. Procédé suivant l'une des revendications 6 à 10,
**caractérisé**
**en ce qu'**on traite les nanoparticules (11, 14) par un agent mouillant, avant de les disperser dans l'électrolyte (24).

12. Procédé suivant l'une des revendications 6 à 11,
**caractérisé**
**en ce qu'**on produit la matière de cellulose par mise en couche de plusieurs strates imprégnées au préalable.
